Europäisches Patentamt

(19) European Patent Office

Office européen des brevets

(11) Numéro de publication: **0 1 13 265**
**B1**

(12) **FASCICULE DE BREVET EUROPEEN**

(45) Date de publication du fascicule du brevet:
02.04.86

(51) Int. Cl.⁴: **B 61 D 17/08**, B 62 D 33/02

(21) Numéro de dépôt: **83402317.8**

(22) Date de dépôt: **02.12.83**

(54) **Dispositif de fixation et d'escamotage de ridelles pour un véhicule de transport.**

(30) Priorité: **03.12.82 FR 8220249**

(43) Date de publication de la demande:
**11.07.84 Bulletin 84/28**

(45) Mention de la délivrance du brevet:
**02.04.86 Bulletin 86/14**

(84) Etats contractants désignés:
**AT BE CH DE GB IT LI LU NL SE**

(56) Documents cités:
**DE - A - 2 532 400**
**DE - C - 332 235**
**FR - A - 1 477 474**
**FR - A - 1 554 791**
**GB - A - 24 310**

(73) Titulaire: **SOCIETE NOUVELLE DES ATELIERS DE VENISSIEUX, chemin du Génie Boite Postale No 4, F-69631 Venissieux Cédex (FR)**
Titulaire: **Etablissements FAUVET-GIREL, 40 boulevard Henri Sellier, F-92150 Suresnes (FR)**

(72) Inventeur: **Urrea, Robert, 27 rue Viret, F-69100 Villeurbanne (FR)**

(74) Mandataire: **Loyer, Bertrand et al, Cabinet Pierre Loyer 18, rue de Mogador, F-75009 Paris (FR)**

ACTORUM AG

## Description

La présente invention se rapporte à un dispositif de fixation et d'escamotage de ridelles destinées à un véhicule de transport tel que par exemple un wagon de chemin de fer.

Lorsqu'un véhicule doit être équipé de ridelles destinées à soutenir la charge, celles-ci sont généralement solidarisées au châssis par l'intermédiaire d'articulations. Pour empêcher que les ridelles ne basculent vers l'extérieur, on les soutient à l'aide de ranchers verticaux escamotables.

Pour effacer les ridelles, on escamote les ranchers en les déverrouillant et en les faisant basculer par pivotement vers l'extérieur; les ridelles, alors rabattues, pendent verticalement le long du véhicule et on les verrouille dans cette position pour interdire tout balancement de celles-ci pendant le déplacement du véhicule.

Ces dispositifs connus présentent quelques inconvénients. D'une part, la rotation vers l'extérieur des ridelles est pénalisante puisqu'elle nécessite, à l'extérieur du véhicule, un espace suffisant pour permettre cette rotation. Dans le cas d'un wagon de chemin de fer par exemple, il est impossible, avec de tels dispositifs, d'ouvrir les ridelles le long d'un mur ou le long d'un quai. D'autre part, en circulation avec les ridelles abaissées, il n'est jamais certain que les verrous d'immobilisation n'ont pas été omis, ce qui pourrait provoquer de graves accidents; on pourrait par exemple heurter un autre train ou le mur d'un tunnel.

Le dispositif de fixation et d'escamotage de ridelles conforme à l'invention ne présente pas ce genre d'inconvénients. Il est caractérisé en ce que chaque ridelle est équipée, dans sa partie inférieure, d'au moins deux pièces de support équipées chacune d'au moins deux doigts de support, ou analogues, disposés l'un au-dessus de l'autre, et en ce que le châssis du véhicule est équipé d'au moins une glissière pour chacune desdites pièces de support, chaque glissière étant destinée à contenir au moins un doigt inférieur de la pièce de support associée et étant munie, à sa partie supérieure, d'au moins un espace creux formant logement pour au moins un doigt supérieur de ladite pièce de support, ledit logement étant adjacent à un décrochement latéral du canal de la glissière, de manière que ledit doigt supérieur puisse être dégagé de son logement par soulèvement et engagé par déplacement latéral dans ledit décrochement.

L'invention sera mieux comprise à l'aide de la description suivante d'un exemple de réalisation, en référence aux dessins annexés dans lesquels:

— la fig. 1 est une vue latérale schématique du dispositif de l'invention, avec la ridelle en position haute,

— la fig. 2 est une vue en coupe schématique selon la direction AA de la fig. 1,

— la fig. 3 est une coupe transversale schématique semblable à celle de la fig. 2, mais avec la ridelle escamotable en position basse.

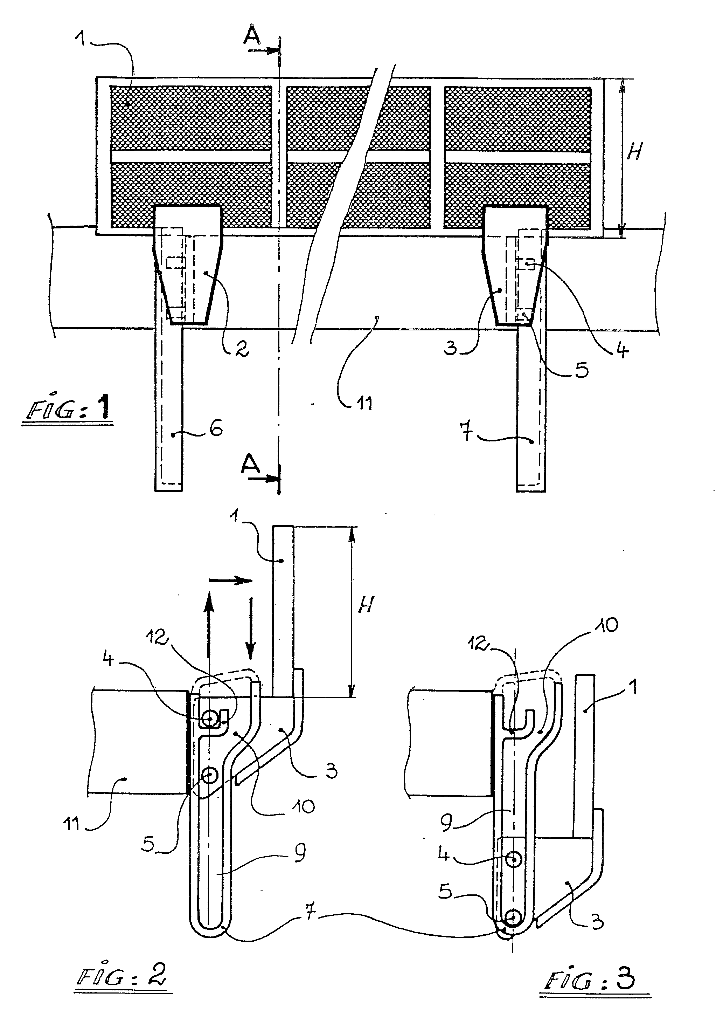

En se reportant à l'ensemble des fig. 1 et 2, on reconnaît une ridelle 1, par exemple pour wagon ferroviaire. Conformément à l'invention, la ridelle est équipée, à droite et à gauche, de deux pièces de support 2, 3, équipées chacune de deux doigts horizontaux 4, 5 placés l'un au-dessus de l'autre dans un plan vertical parallèle au plan de la ridelle.

Sur le châssis 1 du véhicule ferroviaire sont fixées, en correspondance avec chacune des pièces de support 2, 3, deux glissières 6, 7 s'étendant vers le bas du véhicule sur une distance légèrement supérieure à la hauteur H de la ridelle.

Comme on le voit sur la fig. 2, chaque glissière 6 ou 7 présente, à sa partie haute, un espace creux 12 formant logement pour le doigt supérieur 4. Par ailleurs, la glissière présente, à cet endroit, un décrochement latéral 10 permettant au doigt 4 d'être dégagé, par soulèvement, de son logement 12 et introduit, par déplacement latéral, dans le décrochement adjacent 10, et par suite dans le canal 9 de la glissière.

On effectue évidemment cette opération de dégagement en soulevant et en écartant latéralement la ridelle 1. Puis on laisse retomber la ridelle, les doigts 4 et 5 coulissant alors dans le canal 9, 10 de la glissière jusqu'à ce que l'on parvienne à la position schématisée sur la fig. 3, où la ridelle 1 est en position totalement escamotée vers le bas.

Avec le dispositif représenté, les glissières 6, 7 sont totalement ouvertes à leur partie supérieure, ce qui permet, si on le désire, d'enlever les ridelles totalement de manière pratiquement instantanée. En variante, si l'on veut au contraire éviter cette possibilité de démontage instantané, les glissières peuvent être totalement fermées dans leur partie supérieure, comme figuré en pointillés sur les fig. 2 et 3; on enlèvera alors les ridelles, si on le désire, par démontage des doigts 4, 5, rendus amovibles en conséquence par des moyens classiques non représentés. En variante également, la partie représentée en pointillés peut être un couvercle amovible muni d'un dispositif de verrouillage.

Il va de soi que l'invention n'est pas limitée à l'exemple de réalisation qui vient d'être décrit, mais s'applique à tous les dispositifs équivalents. Par exemple, les glissières pourraient ne pas être simplement verticales, mais présenter une partie inférieure horizontale, faisant suite à une partie supérieure verticale, permettant d'escamoter les ridelles horizontalement sous le châssis du véhicule.

## Revendications

1. Dispositif de fixation et d'escamotage de ridelles pour un véhicule de transport, caractérisé en ce que chaque ridelle (1) est équipée, dans sa partie inférieure, d'au moins deux pièces de support (2, 3) équipées chacune d'au moins deux doigts de support (4, 5), ou analogues, disposés l'un au-dessus de l'autre, et en ce que le châssis (1) du véhicule est équipé d'au moins une glissière (6, 7) pour chacune desdites pièces de support, chaque glissière étant destinée à contenir au moins un doigt inférieur (5) de la pièce de support associée (3) et étant munie, à sa partie supérieure, d'au moins un espace creux (12) formant logement pour au moins un doigt supérieur (4) de ladite

pièce de support (3), ledit logement (12) étant adjacent à un décrochement latéral (10) du canal (9) de la glissière, de manière que ledit doigt supérieur (4) puisse être dégagé de son logement (12) par soulèvement et engagé par déplacement latéral dans ledit décrochement (10).

2. Dispositif de fixation et d'escamotage de ridelles selon la revendication 1, caractérisé en ce que les glissières (6, 7) sont ouvertes à leur partie supérieure.

**Patentansprüche**

1. Befestigungs- und Versenkungseinrichtung für die Leitern eines Transportfahrzeuges, dadurch gekennzeichnet, dass jede Leiter (1) an ihrem unteren Ende mit wenigstens zwei Tragteilen (2, 3) mit je wenigstens zwei übereinander angeordneten Tragbolzen (4, 5) od. ä. ausgestattet ist, und dass das Fahrgestell (11) des Fahrzeuges mit wenigstens einer Führungsbahn (6, 7) für jede der Tragteilen (2, 3) versehen ist, wobei jede Führungsbahn wenigstens einen unteren Bolzen (5) des zugeordneten Tragteils (3) aufnimmt, und an seinem oberen Teil wenigstens einen Hohlraum (12) aufweist, der eine Aufnahme für wenigstens einen oberen Bolzen (4) des Tragteils (3) bildet, und wobei die Aufnahme (12) angrenzend einer seitlichen Erweiterung (10) des Kanals (9) der Führungsbahn angeordnet ist, so dass der obere Bolzen (4) durch Anheben aus der Aufnahme (12) frei gemacht, und durch seitliche Verschiebung in die Erweiterung (10) eingeführt werden kann.

2. Befestigungs- und Versenkungseinrichtung für Leitern nach Anspruch (1), dadurch gekennzeichnet, dass die Führungsbahnen (6, 7) an ihren oberen Enden offen sind.

**Claims**

1. Fastening and unfastening device for side racks of a transport vehicle, characterized by the fact that each side rack (1) is provided at its lower end with two support members (2, 3) each provided with at least two fingers (4, 5) or the like arranged one above the other and that the body (11) of said vehicle is provided with at least one sliding rail (6, 7) for each of said support member, each sliding rail being intended to receive at least one lower finger (5) of the corresponding support member (3) and being provided at its upper end with at least one hollow space (12) constituting a housing for at least one upper finger (4) of said support member (3), said housing being adjacent to a lateral deviation (10) of the guiding channel (9) of the sliding rail in such a way that said upper finger (4) may be lifted out of its housing (12) and laterally engaged in said lateral deviation (10).

2. Device according to claim 1, wherein said sliding rails (6, 7) are open ended.

$\underline{FiG:1}$

$\underline{FiG:2}$

$\underline{FiG:3}$

5